# EUROPEAN PATENT APPLICATION

(11) **EP 2 107 569 A1**
(43) Date of publication of application: **07.10.2009**
(21) Application number: 08006512.1
(22) Date of filing: 31.03.2008
(51) Int. Cl.: G11B 33/04, B65D 85/57

(54) **Package for an optical storage medium**

(71) Applicant: Sony DADC Austria AG, 5081 Anif (AT)
(72) Inventor: Daum, Dieter, 5440 Kuchl (AT); Schindlauer, Günther, 5026 Salzburg (AT); Wagner, Erwin, 5400 Hallein (AT); Feldmaier, Kathrin, 5600 St. Johann im Pongau (AT); Rangetiner, Anton, 6323 Bad Häring (AT)
(74) Representative: Müller - Hoffmann & Partner

(57) **Abstract**

A package for an optical storage medium, comprising: a cover part; a support part having a first part, a second part and a support region, wherein, when an optical storage medium is inserted in the package, the support region abuts at least partly against the optical storage medium; an overlay, wherein the overlay and the second part form a receptacle; a hinge located between the first and second parts, wherein the hinge at least partially runs through the support region; wherein the package is made out of a single piece of paper or cardboard.

## Description

An embodiment of the invention relates to a package for an optical storage medium. A further embodiment of the invention relates to a method of manufacturing a package for an optical storage medium.

### BACKGROUND

There exist a large number of packages for optical storage media. One goal when designing a package for an optical storage medium is that the optical storage medium, e.g. a disc-type optical storage medium, is easily insertable and removable from the package. Further, it is desirable that the package is easy to manufacture at low costs. Further, environmental issues are also important. The package should be "environmentally friendly" (eco friendly).

### BRIEF SUMMARY

It is an object of the invention to provide a package for an optical storage medium which fulfils the above criteria. A further object is to provide a method for manufacturing such a package.

This object is solved by a package according to claim 1 and a method of manufacturing according to claim 14.

Further details of the invention will become apparent from a consideration of the drawings and ensuing description.

### BRIEF DESCRIPTION OF THE SEVERAL VIEWS OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
- Fig. 1: shows an embodiment of the package in an unfolded state.
- Fig. 2: shows a further embodiment of the package with a recess in an overlay in an unfolded state.
- Fig. 3: shows a further embodiment of the package with a prominent part in an unfolded state.
- Fig. 4: shows a further embodiment of the package with a strengthened cover part in an unfolded state.
- Fig. 5: shows a perspective view of the package according to the embodiment of Fig. 4.
- Fig. 6: shows a further embodiment of the package with a further cover part in an unfolded state.
- Fig. 7: shows a perspective view of the package according to the embodiment of Fig. 6.
- Fig. 8: shows a sectional view of the package according to the embodiment of Figs. 6 and 7 in a closed (folded) state.
- Fig. 9: shows a further embodiment where the overlay is folded in from a side face.
- Fig. 10: shows a further embodiment with a plurality of prominent parts.
- Fig. 11: shows a further embodiment having a relatively small overlay without an embossed region.
- Fig. 12: shows a further embodiment where the hinge does not extend parallel to the hinge between the cover part and support part.
- Fig. 13: shows a further embodiment similar to that of Fig. 12, wherein a prominent part is provided.
- Fig. 14: shows a further embodiment, wherein a debossed region is provided.
- Fig. 15: shows a further embodiment, wherein a further lug is provided.
- Fig. 16: shows a further embodiment, wherein the prominent part folds onto the first part 4A.
- Fig. 17: shows a further embodiment of a package for two optical storage media.
- Fig. 18: shows the package of Fig. 17 in a perspective view.

### DETAILED DESCRIPTION

In the following, embodiments of the invention are described. It is important to note, that all described embodiments in the following may be combined in any way, i.e. there is no limitation that certain described embodiments may not be combined with others. Further, it should be noted that same reference signs throughout the figures denote same or similar elements.

It is to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

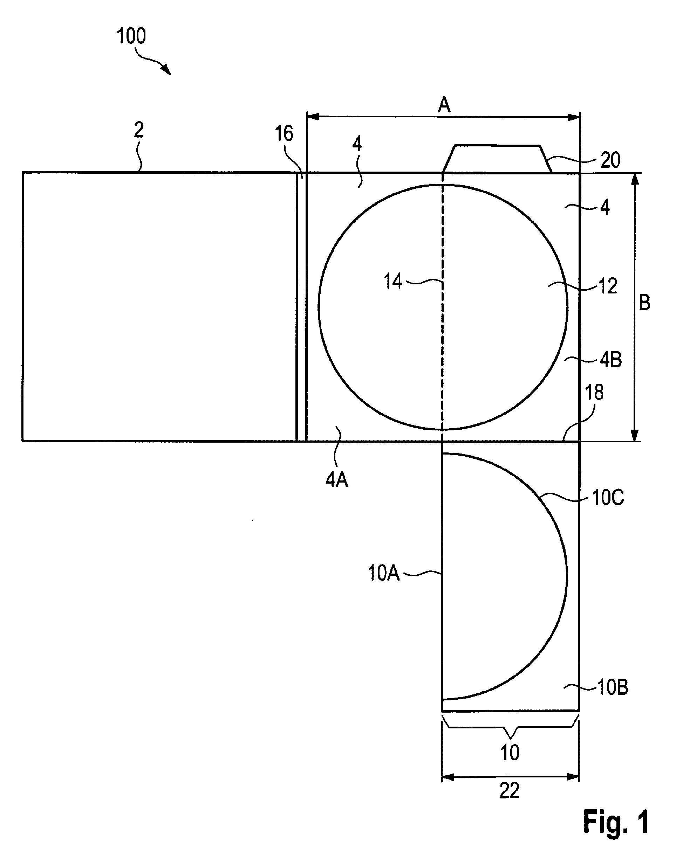

Fig. 1 shows an embodiment of a package 100 for an optical storage medium in an unfolded state. The package has a cover part 2, support part 4, and an overlay 10.

Support part 4 has a first part 4A and second part 4B. First part 4A and second part 4B are connected by a hinge 14. The hinge may be realized by a linear weakening of the material out of which the package is manufactured. The material may e.g. be paper or card board. Hinge 14 may also be realized by a perforation or by a combination of a perforation and a linear weakening.

Hinge 14 is designed such that first and second parts 4A, 4B may be easily folded (moved) with respect to each other, wherein the folding is such that second part 4B may easily be folded "backwards", i.e. in a direction into the drawing plane of Fig. 1.

Support part 4 further has a support region 12. The circumference of the support region substantially corresponds to the circumference of the optical storage medium for which the package is designed. In the embodiment of Fig. 1, the package is designed for a disc-type optical storage medium such as e.g. a compact disc (CD), digital versatile disc (DVD) or Blu-ray disc (BD).

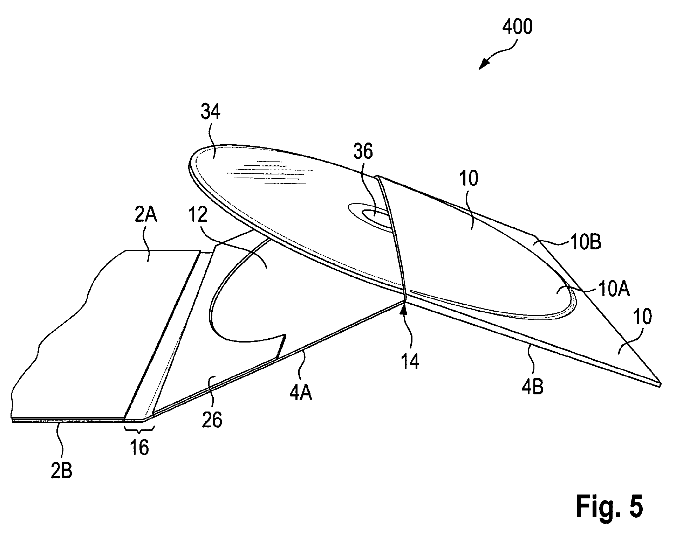

Therefore, in the embodiment of Fig. 1, support region 12 has a circular shape with a diameter corresponding to the diameter of the disc type optical storage medium. When the package is assembled, an inserted optical storage medium abuts at least partly against the support region 12. Further, as can be seen, hinge 14 runs at least partially through the support region 12. As will be seen later, e.g. in Fig. 5, this allows an easy insertion/removing of the optical storage medium.

The width A and height B of the package may be only slightly larger than the diameter of the disc so that the disc be received by the package. For example, the width A and height B may be e.g. 0.5 to 5 mm larger than the intended optical disc. In some embodiments the fit of the disc in the packaging may be tight such as not to fall out when subjected to gravitation or force.

Overlay 10 comprises an embossed region 10A and a plane surface region 10B. In the view shown in Fig. 1, embossed region 10A lies in a lower plane than the drawing plane. Plane surface region 10B essentially lies in the drawing plane and in the same plane as second part 4B.

When the package 100 is assembled, overlay 10 is folded along folding line 18 onto second part 4B. Further, plane surface region 10B is fixed, e.g. glued, to second part 4B. Overlay 10 is, however, only fixed to second part 4B where, after folding along folding line 18, plane surface region 10B abuts second part 4B. It is not fixed in the embossed region 10A.

The shape of the embossed region 10A corresponds to the circumference of the optical storage medium for which package 100 is designed for.

Since, in Fig. 1, package 100 is for a disc type storage medium, the embossed region 10A, corresponds to an embossed semi-circle along line 10C. The radius of the embossed semi circle 10C substantially corresponds to the radius of the disc type storage medium. The radius of the embossed semi-circle 10C may be slightly larger than the radius of the disc-type storage medium, so that the receptacle is large enough to receive the disc-type storage medium. For example, the radius of the embossed semi-circle 10C may be 0.5 to 5 mm larger than that of the optical disc intended to be received by the package. In some embodiments the fit of the disc in the packaging may be tight such as not to fall out when subjected to a gravitational force. In other words, the radius of the embossed semi-circle 10C may be varied in order to determine a desired fit (loose fit or tight fit) of the disc.

When overlay 10 has been folded onto second part 4B and fixed in the plane surface region 10B, second part 4B and overlay 10 form a receptacle or sleeve for the optical storage medium. When the package is assembled, the optical storage medium is at least partially insertable into the receptacle. In the embodiment of Fig. 1, about one half of the optical storage medium may be received by the receptacle.

Optionally, in order to realize a more robust fixing of the overlay 10 on the second part 4B, a lug 20 may be provided which may be fixed e.g. glued onto plane surface region 10B during assembling the package.

It should be noted that the embossing of overlay 10 is entirely optional. It is not necessary that there is at all provided an embossed region 10A. However, providing the embossed region 10A as described above, may allow an easier inserting/removing of the optical storage medium. The embossed region 10A may also delimit the area to which adhesive may be applied during the manufacturing process.

As said above, in the embodiment depicted in Fig. 1, the dimensions are such that about one fourth to one half of a disc-type optical storage medium fits into the receptacle formed by overlay 10 and second part 4B. It is possible, however, to reduce a width 22 of overlay 10. For example, the width 22 may be reduced such that, when an optical storage medium is inserted, only about one fourth or less of the optical storage medium is covered by the overlay 10. In this case, frictional forces between the optical storage medium and overlay 10/second part 4B are less than if width 22 is larger. In other words, by varying width 22, the force needed for inserting/removing an optical storage medium from the package, may be influenced. If width 22 is reduced, and consequently frictional forces between overlay 10 and an inserted optical storage medium are reduced, it may not be necessary to provide the embossed region 10A as explained above. This may allow an easier manufacturing since it is not necessary to emboss overlay 10.

Package 100 further comprises a further hinge 16 provided between cover part 2 and first part 4A. Hinge 16 may also be realized by a linear weakening, e.g. manufactured by embossing and/or by a perforation.

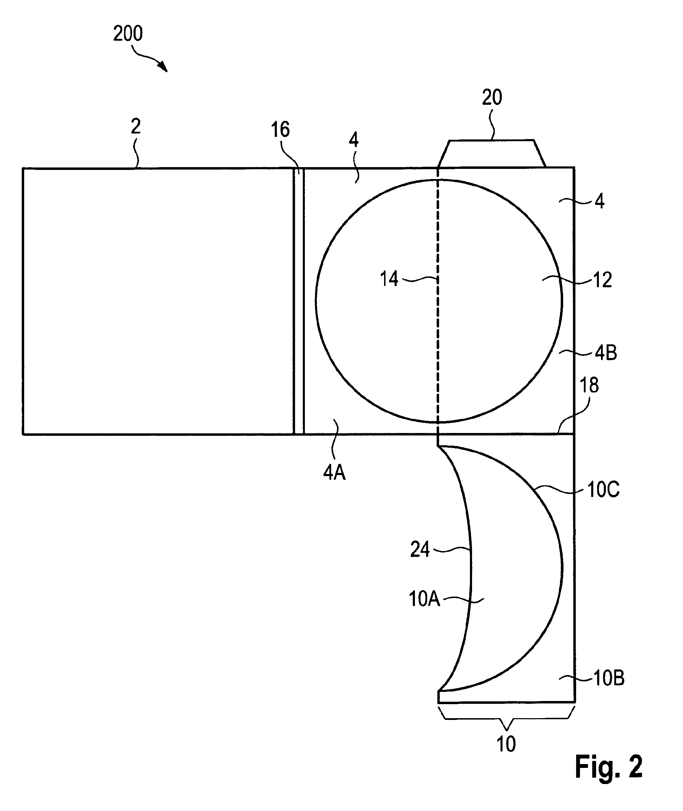

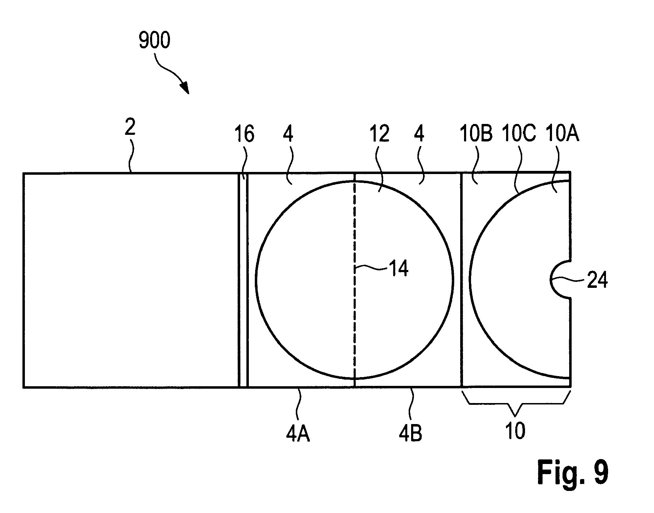

Fig. 2 shows a further embodiment of a package 200. Package 200 is substantially similar to that of Fig. 1. However, there is a difference in that overlay 10 has a recess 24. Recess 24 has a circular shape defined by the arc of a circle of greater diameter than that which corresponds to the disc to be received. Recess 24, thus, reduces the area of an inserted optical storage medium covered by overlay 10. This may allow an easier gripping of an optical storage medium inserted in the package. Other forms of recess 24 are possible, e.g. a triangular shape or a smaller circular shape provided only in the middle of overlay 10 (see e.g. the shape of recess 24 in Figs. 9, 10, 12, 13).

If the optical storage medium is a disc-type optical storage medium, recess 24 may have dimensions such that a centre hole of the inserted disc is at least partially not covered by overlay 10. Thus, a user that wants to remove the disc from the package may easily grip the disc at a side face and the centre hole between two fingers.

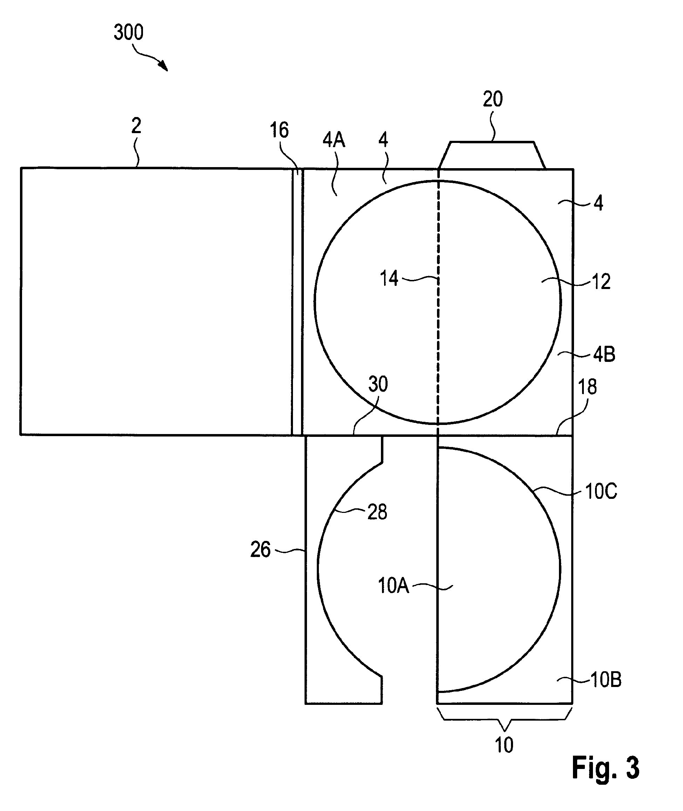

Fig. 3 shows a further embodiment of a package 300. The difference between the embodiments of Figs. 1 and 2 is the provision of a prominent part 26. "Prominent" throughout this specification means "protruding from" or "jutting out from" and is intended to distinguish part 26 when the packaging is in an unfolded or unsampled state. However, in the sense of this application, the term "prominent part" is also intended to define part 26 in its or the packaging's folded or assembled state. As is readily apparent from Fig. 3, when prominent part 26 is folded onto first part 4A and fixed thereon, due to the thickness of the material used for prominent part 26, there will be formed a protrusion on first part 4A.

On one side, prominent part 26 has a shape corresponding substantially to a circumference of an optical storage medium to be inserted in the package. In the example of Fig. 3, the package 300 is designed for a disc-type optical storage medium. Therefore, prominent part 26 on one side comprises a circular shape 28. The radius of circular shape 28 corresponds to, i.e. is slightly larger than the radius of the optical disc for which the package is designed. During assembling the package 300, prominent part 26 is folded along further folding line 30 onto first part 4A. Thus, prominent part 26 at least partly roughly adjoins the circumference of support region 12. Thus, if an optical storage medium is inserted in the package, the optical storage medium may abut against prominent part 26 and is thereby secured from moving in the package. This may avoid e.g. scratches on a surface of the optical storage medium.

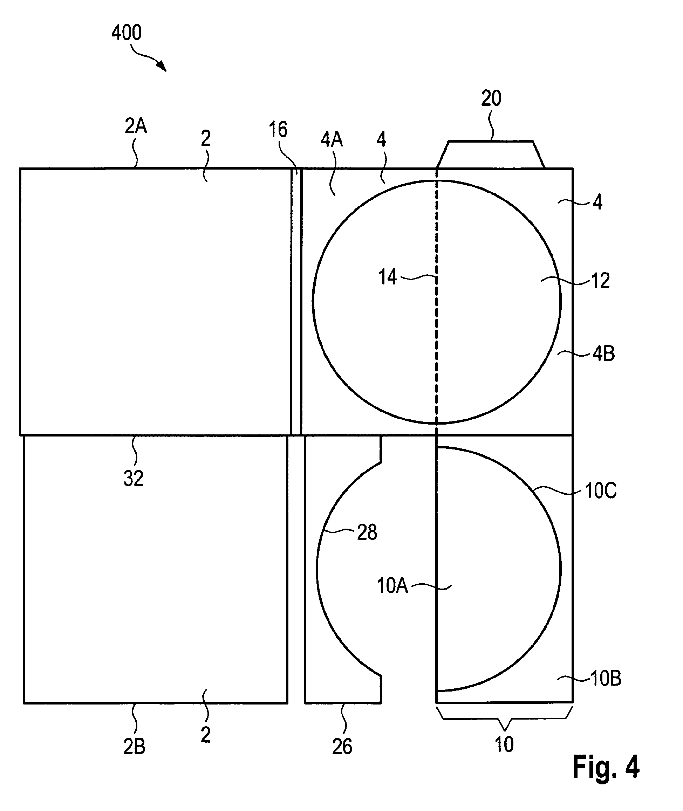

Fig. 4 shows a further embodiment of a package 400. In package 400, cover part 2 comprises a first cover part 2A and a second cover part 2B. During manufacturing the package, the second cover part 2B is folded along further folding line 32 onto the first cover part 2A and fixed thereon.

Thus, in the embodiment of Fig. 4, cover part 2 substantially consists of two pieces of card board or paper glued onto each other, wherein the two pieces of card board are solidly connected along the folding line 32. Thus, the thickness of cover part 2 in the embodiment of Fig. 4 is about twice the thickness of support region 12. Thus, cover part 2 in the embodiment of Fig. 4 may be more stable than e.g. in the embodiment of Fig. 1 where the cover part substantially only consists of one layer of paper or card board. The result is an overall stabilization of the package.

Fig. 5 shows the package 400 of Fig. 4 in a perspective view with a disc 34 inserted in the receptacle formed by second part 4B and embossed region 10A.

As can be seen, when package 400 is opened, hinge 14 allows to fold first part 4A with respect to second part 4B such that only a part of disc 34 (roughly half of the disc 34) remains in contact with support region 12 (in the view of Fig. 5 this part is below embossed region 10A). Thus, it is easy for a user to remove disc 34 from the package.

Usability of the package is further enhanced, since, as seen, a centre hole 36 of the disc 34 is accessible, and a user may conveniently remove disc 34 from the package with two fingers by placing one finger through centre hole 36 and using another finger, e.g. a thumb, to grip disc 34 at the outer circumference.

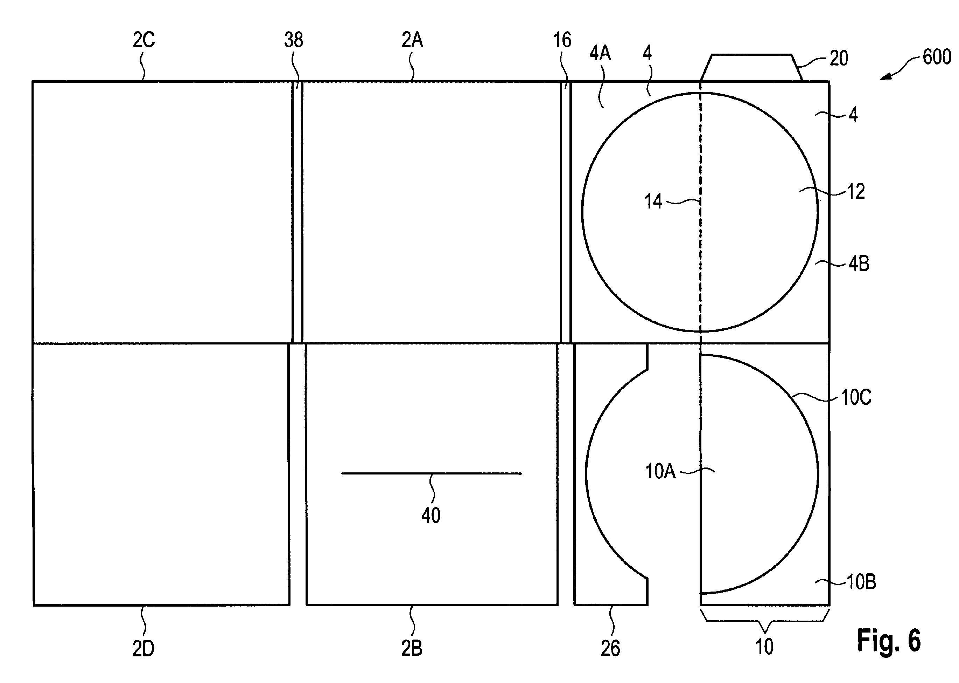

Fig. 6 shows a further embodiment of a package 600, wherein cover part 2 in addition to first and second cover parts 2A, 2B comprises further cover parts 2C, 2D. When assembling the package 600 of Fig. 6, cover part 2D is folded and fixed onto cover part 2C. This allows further surfaces which may be provided with information printed thereon describing the contents of the optical storage medium.

It is further possible that still further cover parts are connected at the left hand side of Fig. 6, i.e. connected to cover part 2C. Thus, additional foldable cover parts may be provided further increasing the available space for information about the contents of the optical storage medium.

Similarly, it is possible to provide further receptacles for further optical storage media in the same package. This may be realized by simply repeating the structure defined above, i.e. the structure defined by parts with reference signs 4A, 4B, 10, 26, and 14. Such a structure may be connected on either side in Fig. 6, i.e. connected to cover part 2C or connected to second part 4B. The connecting may be realized with a hinge in the form of the hinges 16 and 38.

Additionally, it is possible to provide a cut 40 in cover part 2B or cover part 2D (not shown). When the surface of cover part 2B is not entirely fixed onto cover part 2A, i.e. an adhesive is not applied to the entire surface of the cover parts, cut 40 may be a convenient way to provide a further receptacle in the form of a pocket to insert a booklet.

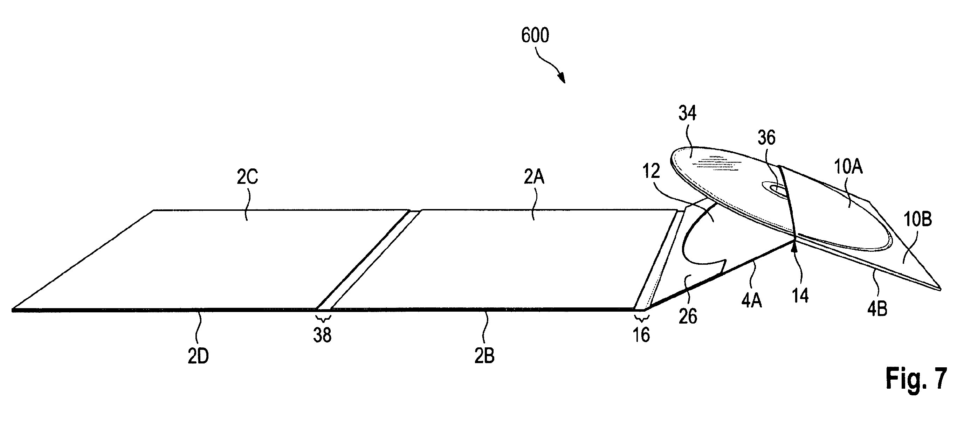

Fig. 7 shows a perspective view of package 600 of Fig. 6. As can be seen, package 600 is essentially similar to package 400 of Fig. 5. However, there is provided a further cover part 2C, 2D that can be folded around the disc and cover parts 2A, 2B in a folded state.

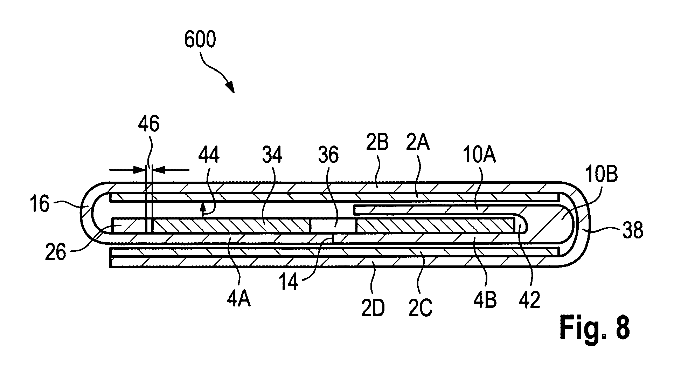

Fig. 8 shows package 600 with inserted disc 34 in a folded state. Thereby, reference sign 42 denotes a receptacle which is formed by second part 4B and embossed region 10A.

As can be seen in Fig. 8, prominent region 26 stabilizes the position of disc 34. This is indicated by arrows 46. A further arrow 44 indicates a direction into which disc 34 might move when the package 600 is exposed to shocks that may result from transporting or taking out package 600 of a shelf. In such a case, the disc 34 would immediately abut against cover part 2A so that hinge 14 may not be operable as long as package 600 remains closed.

In other words, hinge 14 does not effect the stability of package 600 since it is not operable since disc 34 stabilizes the package. If no disc 34 is inserted in package 600, this effect would still be the same since in this case cover parts 2A, 2B, 2C, 2D stabilize the package so that hinge 14 is not operable.

In other words, hinge 14 is only operable when the package is opened as e.g. shown in the perspective views of Figs. 5 and 7.

Fig. 9 shows a further embodiment of a package 900. The difference in this embodiment with respect to the above described embodiments is that overlay 10 is folded onto second part 4B from a side opposite to hinge 16. This way, it may be possible to reduce the amount of material needed for manufacturing since it might be easier to arrange the form of the unfolded package 900 on a sheet of paper or card board from which the unfolded package 900 is cut out.

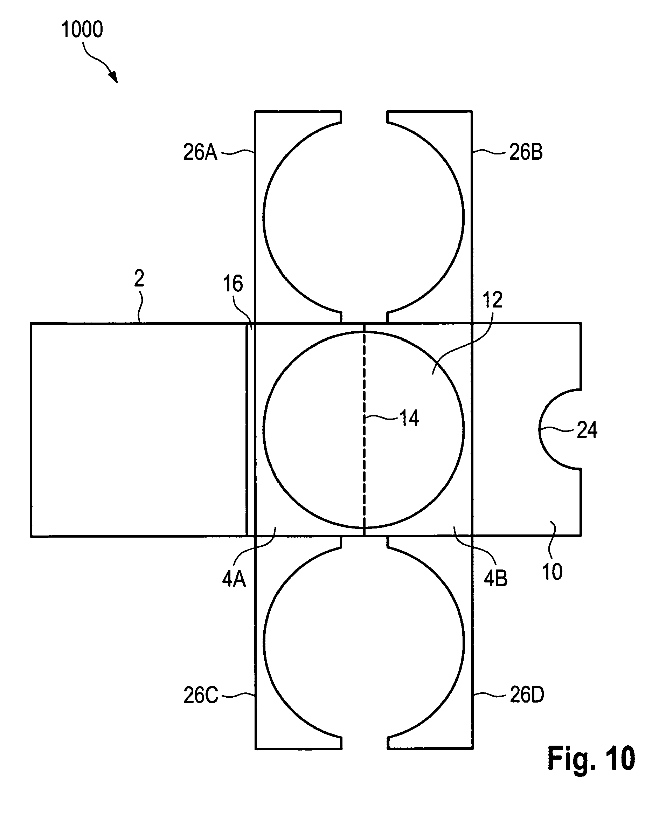

Fig. 10 shows a further embodiment of a package 1000. The package 1000 comprises a plurality of prominent parts 26A, 26B, 26C, 26D. It would also be possible to omit prominent parts 26C, 26D and to only have prominent parts 26A, 26B.

Prominent parts 26A, 26B, 26C, 26D are folded and fixed on first and second parts 4A, 4B. Thus, in a region outside support region 12, in the embodiment of Fig. 10, there may be provided several layers of card board or paper for securing a storage medium.

Further, in package 1000, overlay 10 may not have an embossed region. Of course, it would be possible to provide an embossed region. However, an embossed region might be omitted since prominent parts 26B and 26D, when folded and fixed onto each other, already provide a receptacle together with overlay 10 in support region 12, since the overlay 10 is folded onto the prominent parts during assembling the package.

Thus, in the embodiment of Fig. 10, embossing of the overlay 10 might not be needed which might reduce complexity of manufacturing the package. Further, since the height of the receptacle which is roughly equal to the thickness of prominent part 26B plus the thickness of prominent part 26D is larger, an optical storage medium might be removed/inserted more easily.

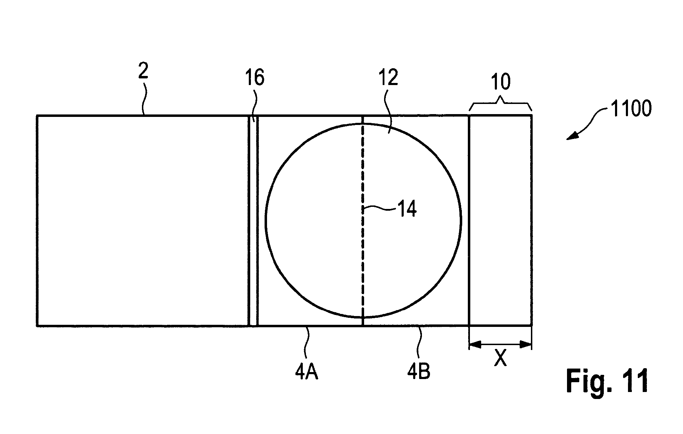

Fig. 11 shows a further embodiment of a package 1100. In the package 1100 the width X of overlay 10 is smaller than in the previous embodiments. Thus, if an optical storage medium is inserted into the package, a smaller part of the optical storage medium is covered by overlay 10. Further, the overlay 10 of package 1100 may not comprise an embossed region. Thus, a frictional force between an inserted optical storage medium and second part 4B and overlay 10, respectively, might be rather high. However, since only a relatively small area of optical storage medium is in contact with overlay 10, the overall force needed for inserting/removing an optical storage medium from the assembled package might be comparable to other above described embodiments.

As can be seen, the amount of material needed for manufacturing package 1100 is further decreased with respect to the above-described embodiments (due to the smaller dimensions of overlay 10). This may be of interest in mass production. Further, manufacturing is easy since no embossing of overlay 10 might be needed. Of course, it would be possible in the embodiment of Fig. 11 to also provide overlay 10 with an embossing.

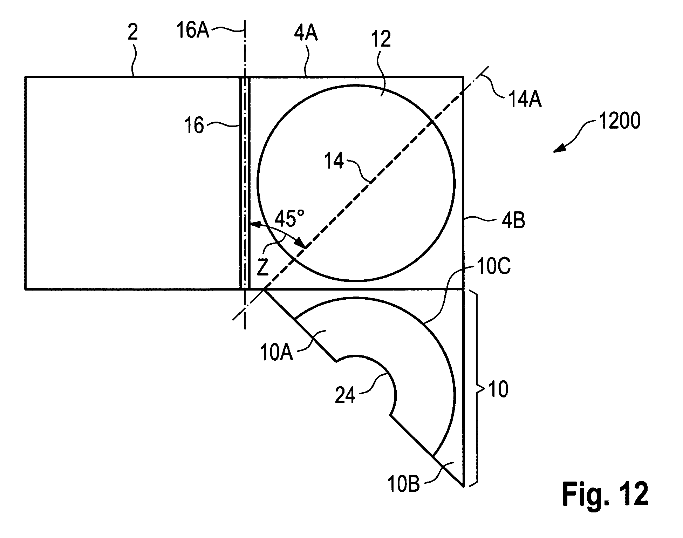

Fig. 12 shows a further embodiment of a package 1200 wherein hinge 14 extends along a first axis 14A and further hinge 16 extends along a second axis 16A. An angle Z between first axis 14A and second axis 16A is roughly 45°. Other possible values are in the range of 30 to 60°.

Further, in the package 1200, overlay 10 has a triangular shape. Thus, when overlay 10 is folded and fixed onto second part 4B overlay 10 may not extend across first axis 14A. Thus, when the package is opened and hinge 14 is bent, the triangular shaped second part 4B is folded downwards (into the drawing plane of Fig. 12) so that, as in the previous embodiments, a part of an inserted optical storage medium becomes freely accessible.

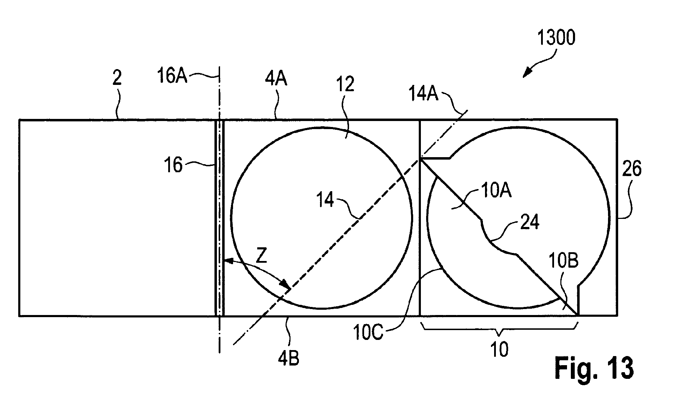

Fig. 13 shows a further embodiment of a package 1300 similar to that of Fig. 12. Package 1300, in addition comprises a prominent part 26 which may be folded and fixed onto first part 4A. Similar to the above embodiments, prominent part 26 may stabilize the position of an inserted optical storage medium.

As already mentioned, all of the above described packages may be made from paper or card board. Thus, the packages may be manufactured "environmental friendly" ("eco friendly"), i.e. manufactured from readily recyclable sheet material with raw material wastage. The material used for the package may also be made from corn starch. It is not necessary to use polystyrene or polypropylene trays which are less environmental-friendly, in that at the time of writing, facilities for the recycling of such materials are relatively less well developed or established than those capable of recycling paper or card board.

It should also be mentioned that the height of the package in all of the embodiments may be varied (see height B in Fig. 1). Thus, packages with standard dimensions of e.g. a CD, DVD or BD may easily be manufactured.

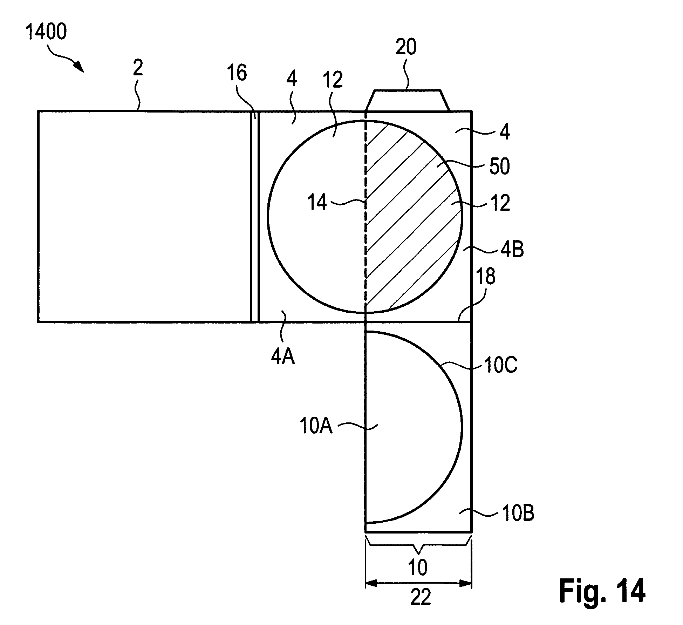

Fig. 14 shows a further embodiment of a package 1400 similar to that of Fig. 1. The difference between package 1400 and package 100, however, is that the package 1400 comprises a debossed region 50. In the view shown in Fig. 14, debossed region 50 lies in a lower plane than the drawing plane. The remaining area of second part 4b (the part which is not debossed) substantially lies in the drawing plane and therefore in the same plane as plane surface region 10B.

Thus, it is clear that, in Fig. 14, both, the debossed region 50 and embossed region 10A lie in a lower plane than the drawing plane. Thus, depending on the point of view, it may also be justified to refer to the debossed region 50 as embossed region. The term "debossed" has, however, been chosen since when the package is assembled, i.e. overlay 10 has been folded and fixed on second part as described above, debossed region 50 and embossed region 10A extend into opposite directions from the plane defined by the area on which second part 4B and plane surface region 10B are fixed onto each other.

As should be self-evident, debossed region 50 enables to enlarge the receptacle for receiving the storage medium.

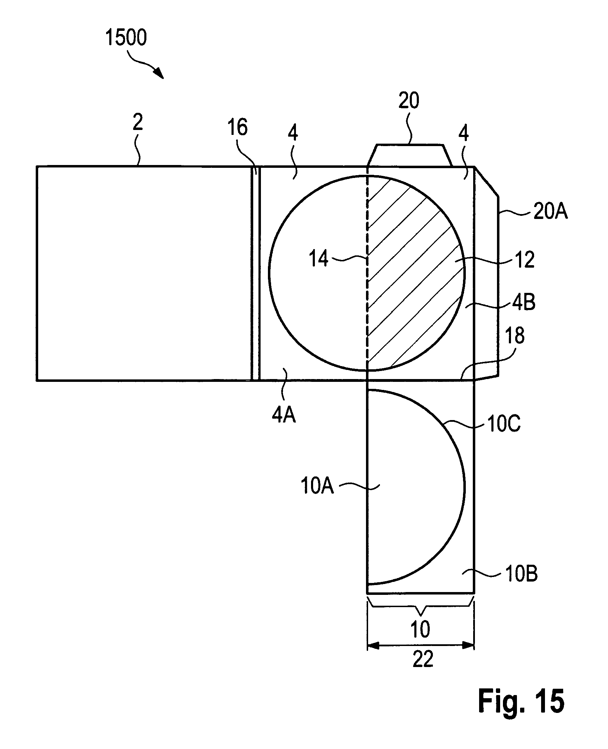

Fig. 15 shows a further embodiment of a package 1500. In package 1500 an additional lug 20A is provided on the side opposite to further hinge 16. The additional lug 20A may enable a better fixing of overlay 10 on second part 4B.

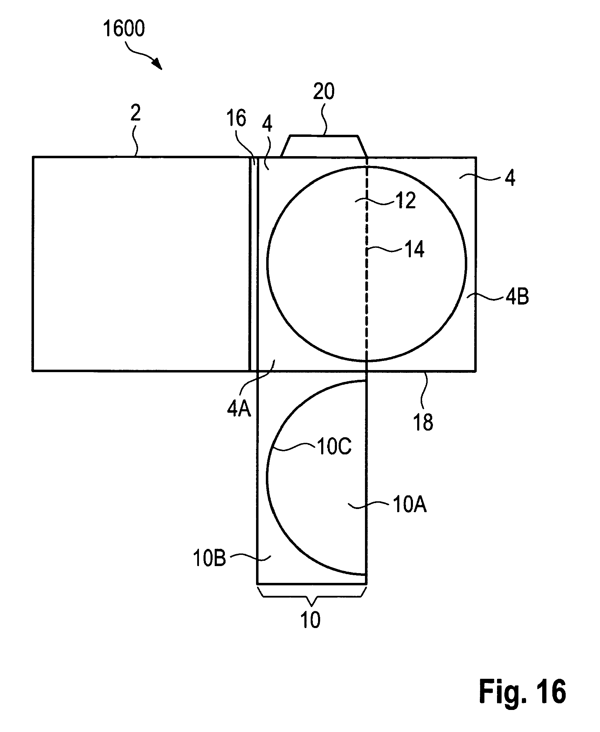

Fig. 16 shows a further embodiment of a package 1600. In package 1600, overlay 10 is folded onto first part 4A and at least partly fixed on first part 4A. When a storage medium is inserted in package 1600, and hinge 14 is operated, the part of support region 12 located on second part 4B is moved away from a surface of the storage medium. Thus, in the package 1600, a storage medium is insertable/removable into/from the package in a direction away from further hinge 16.

In order to prevent a storage medium to fall out of the package, further cover parts such as e.g. cover parts 2C and 2D shown in Fig. 6 may be provided for the package 1600. These additional cover parts may be folded around first and second parts 4A, 4B so that a storage medium may not fall out of the package in a direction away from the further hinge 16 due to the backside of the additional cover parts.

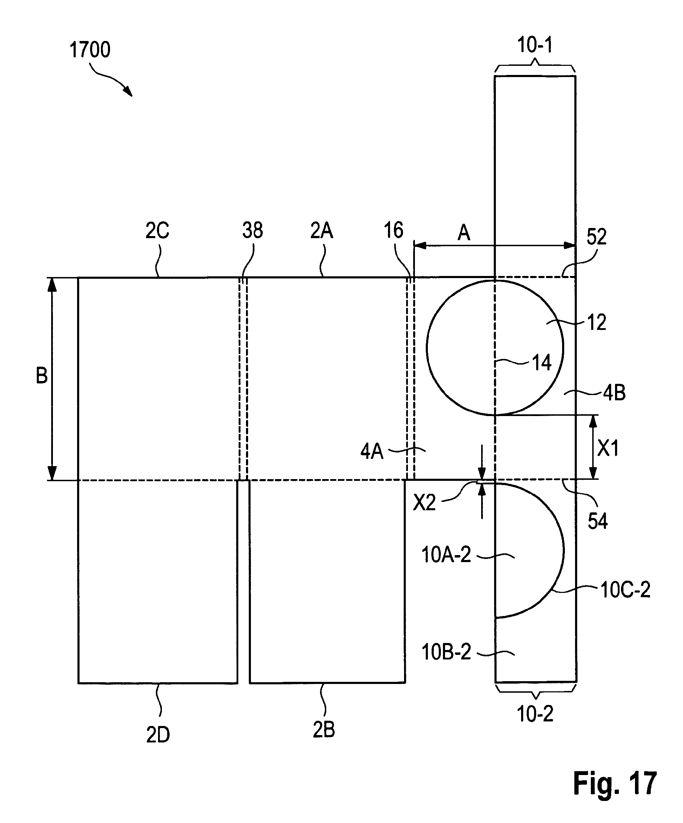

Fig. 17 shows a further embodiment of a package 1700. The height B of package 1700 is larger than width A. In some embodiments height B may be chosen to correspond to a standard dimension of e.g. a DVD or BD package.

Further, package 1700 is designed to receive two optical storage media, partly overlapping. Therefore, package 1700, has two overlays, i.e. a first overlay 10-1 and a second overlay 10-2. When package 1700 is assembled, first overlay 10-1 is folded along folding line 52 and fixed at least partly on a surface of second part 4b. The region where first overlay 10-1 is fixed on second part 4B may not extend into support region 12. Further, support region 12 may be debossed as explained above at hand of Fig. 14. Thus, a storage medium may conveniently be inserted into the receptacle formed by second part 4B and first overlay 10-1.

After folding and fixing first overlay 10-1 on second part 4B, second overlay 10-2 is folded along folding line 54 onto first overlay 10-1 and fixed thereon. Second overlay 10-2 is fixed on an area outside of embossed region 10A-2.

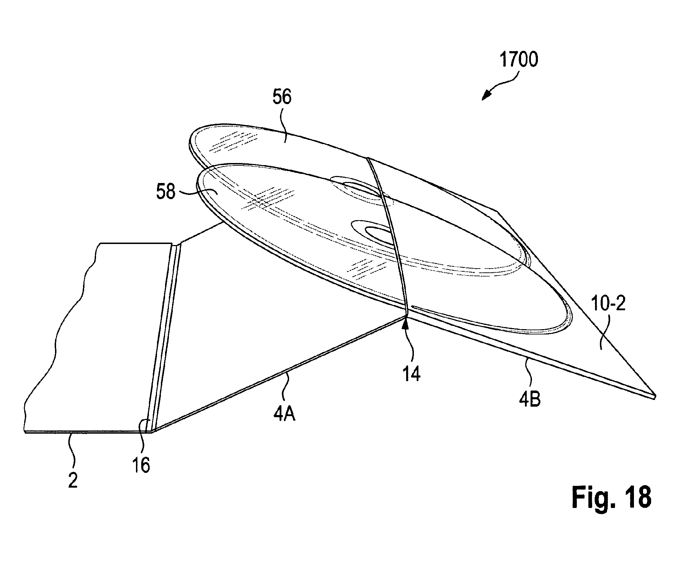

Depending on the desired design of the package, it may be that a distance X1 between support region 12 and folding line 54 is larger than a distance X2 between the embossed semi-circle 10C-2 and folding line 54. Thus, when a first optical storage medium is inserted into the receptacle formed by first overlay 10-1 and second part 4B, and a second optical storage medium is inserted into the receptacle formed by the (upper) surface of first overlay 10-1 and second overlay 10-2, the surfaces of the two optical storage media may be partly visible. Thus, a user may easily recognize if there two optical storage media inserted in the package or only one or none. The distances X1 and X2 may be chosen such that a center hole of two inserted discs is at least partly accessible (see Fig. 18). This way both discs may be conveniently inserted/removed into/from the package.

As is clear, in the package 1700, there will be two receptacles formed which are separated by first overlay 10-1. Due to the thickness of the material used for first overlay 10-1, when two optical storage media are inserted in the two receptacles, they will be kept apart from each other, at least with a distance of the material thickness of first overlay 10-1. Thus, the surfaces of two optical storage media inserted in the two receptacles may not abut each other. This may help to avoid scratches on the surfaces.

In a further embodiment, there may be an additional overlay (not shown in Fig. 17) which may e.g. be folded in from a side opposite to further hinge 16 (similar as e.g. in the embodiment of Fig. 9).

This additional overlay may be folded and fixed onto first overlay 10-1, i.e. a further overlay may be arranged in between first overlay 10-1 and second overlay 10-2. This would further increase the distance between inserted discs due to the thickness of the material of the additional overlay. The additional overlay may be referred to as a "spacer" element since it increases the distance/space between two inserted discs and may help to avoid scratches on the surfaces of the discs.

Fig. 18 shows the package 1700 of Fig. 17 in an assembled state with two discs 56, 58 inserted.

Package 1700 is opened and hinge 14 is bent so that parts of the surfaces of discs 56 and 58 are moved away from first part 4A. Thus, the discs 56, 58 may easily be gripped and taken out or inserted in package 1700.

Although, in the embodiment of Figs. 17 and 18, height B of package 1700 is larger than width A, it is also possible that A and B have the same size. In this case, two inserted discs may lie substantially over each other.

## Claims

1. A package for an optical storage medium, comprising:
a cover part;
a support part having a first part, a second part and a support region, wherein, when an optical storage medium is inserted in the package, the support region abuts at least partly against the optical storage medium;
an overlay, wherein the overlay and the second part form a receptacle;
a hinge located between the first and second parts, wherein the hinge at least partially runs through the support region;
wherein the package is made out of a single piece of paper or cardboard.

2. The package of claim 1, wherein, when an optical storage medium is inserted in the package and the first and second parts move relatively to each other due to an operation of the hinge, the first part moves away from the optical storage medium and the second part stays at least partially in contact with the optical storage medium.

3. The package of claims 1 or 2, comprising a further hinge located between the cover part and the support part.

4. The package of any of the preceding claims, wherein, when the package is closed and an optical storage medium is inserted in the package, the cover part at least partially abuts against the optical storage medium.

5. The package of any of the preceding claims, wherein, when the package is closed, the cover part at least partially abuts against the overlay.

6. The package of any of the preceding claims, wherein the overlay comprises an embossed region having a first circumference corresponding at least partially to a second circumference of an optical storage medium to be received in the receptacle.

7. The package of any of the preceding claims, wherein the overlay comprises a recess on an open side of the receptacle.

8. The package of any of the preceding claims, wherein the first part comprises a prominent part, wherein, when an optical storage medium is inserted in the package, an outer edge of the optical storage medium at least partially abuts against the prominent part.

9. The package of claim 8, wherein the circumference of the prominent part at least partially has a shape corresponding to the shape of the circumference of the optical storage medium.

10. The package of any of claims 3 to 9, wherein the overlay is folded onto the second part and at least partly fixed on the second part.

11. The package of any of claims 3 to 9, wherein the overlay is folded onto the first part and at least partly fixed on the first part.

12. The package of any of claims 9 or 11, wherein the prominent part has a thickness of twice the thickness of the cover part and is formed by folding and fixing two sheets of paper or cardboard onto the first part.

13. The package of any of claims 1 to 5, wherein the optical storage medium is a disc having a diameter, and the width of the overlay is less than one fourth of the diameter.

14. The package of any of claims 3 to 13, wherein the hinge extents along a first axis and the further hinge extents along a second axis, wherein an angle between the first axis and the second axis is between 30 and 60 degrees.

15. The package of any of the preceding claims, wherein at least a part of the support region is debossed.

16. The package of any of the preceding claims, comprising a second overlay, wherein the overlay and the second overlay form a second receptacle.

17. A method of manufacturing a package for an optical storage medium, comprising:
cutting out of a single sheet of paper or cardboard a cover part, a support part and an overlay part, wherein the cover part, support part and overlay part are connected;
defining, on the support part, a support region, wherein the shape of the support region is defined by a circumference of the optical storage medium;
embossing the support part with a linear weakening, wherein the linear weakening at least partly runs through the support region;
folding the overlay onto the second part;
fixing, at least partly, the overlay onto the second part.
